# EUROPEAN PATENT SPECIFICATION

(11) **EP 0 413 380 B1**
(45) Date of publication and mention of the grant of the patent: **22.06.1994**
(21) Application number: 90202053.6
(22) Date of filing: 27.07.1990
(51) Int. Cl.: H02G 3/00, G06F 1/00

(54) **Cabling system for a local network**
Verkabelungssysteme für ein lokales Netzwerk
Système de câblage pour réseau local

(30) Priority: 14.08.1989 NL 8902061
(43) Date of publication of application: 20.02.1991
(73) Proprietor: Koninklijke PTT Nederland N.V., 2509 CH Den Haag (NL)
(72) Inventor: Groen, Hendrik Baltus, NL-2396 Koudekerk aan den Rijn (NL); Nobach, Harm Geert, NL-2264 AC Leidschendam (NL)

(56) References cited:
- EP-A- 0 276 615
- DE-A- 3 704 617

## Description

### A. BACKGROUND OF THE INVENTION

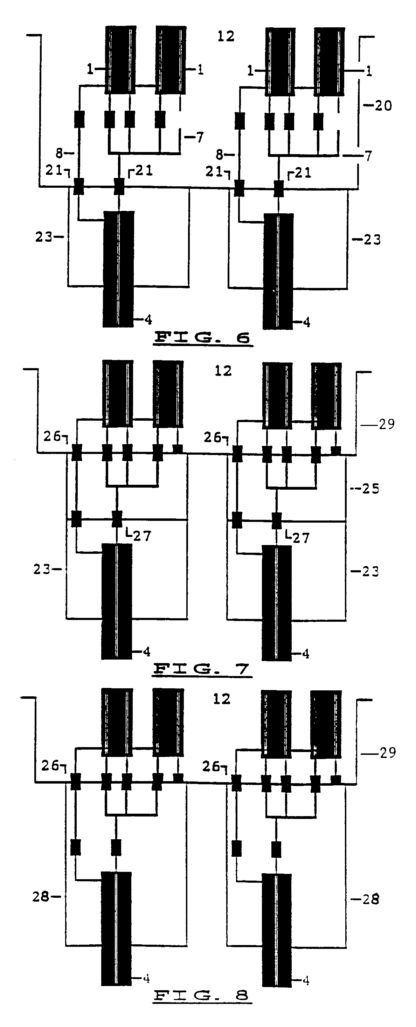

The invention relates to a cabling system for a local network, comprising network connections for connecting terminals and the like to the network via an unbalanced connecting cable having one core and a screening sheath surrounding said core, and furthermore comprising network cables for connecting said network connections to one another, which network cables comprise at least one bundle of two or more cores, and also at least one screening sheath surrounding said bundle, the ends of which cores and screening sheath are terminated at the said network connections. In other words, the invention relates to a cabling system with screened balanced cables (that is to say having two or more cores per screen) to which screened unbalanced connecting cables (that is to say having one core per screen) can be connected. Such cabling systeen is known from DE-A-3704617
There are various methods of connecting unbalanced and balanced cables to one another without doing appreciable damage to the electrical properties, in particular the characteristic impedance, the alternating voltage attenuation and the direct voltage attenuation. The two types of cable can for instance be connected to one another by means of a transformer circuit or by means of a resistor network. Transformer circuits -- as are shown in figures 6c-6f of DE-A-3704617 -- have the disadvantage that unless special provisions are made, direct current cannot be transmitted. A resistor network has the disadvantage of a relatively high attenuation, both for alternating and for direct voltage.

The problems outlined manifest themselves, inter alia, in installing the cabling for a local network. In general, a choice has to be made between unbalanced (coaxial) cables (for example, for an Ethernet network) or balanced cables (for example for an IBM network) for such a cabling system. Normally, the same type of cable is used for connecting the terminal equipment (network server, terminals, PCs) as for the network cabling. However, in cabling, for example, new buildings, the problem arises that it is not known yet at that instant which network system (based on unbalanced or balanced cabling) will be installed.

### B. SUMMARY OF THE INVENTION

1. The present invention provides a cabling system for a local network, comprising network connections for connecting terminals and the like to the network via an unbalanced connecting cable having one core and a screening sheath surrounding said core, and furthermore comprising network cables for connecting said network connections to one another, which network cables comprise at least one bundle of two or more cores, and also at least one screening sheath surrounding said bundle, the ends of which cores and screening sheath are terminated at the said network connections, which cabling system is characterized in that the said network connections, or at least some thereof, comprise a first interconnection which has a very low impedance and which is located between the end of the core of the said connecting cable and the end of one or more of the cores of the said network cables, and also a second interconnection which has a very low impedance and is located between the end of the screen of the connecting cable and the end of the screen of the network cables.
   The invention is based on the somewhat surprising result of an investigation into the transmission behaviour of a cable network formed by balanced screened cables as mentioned above to which, via said interconnections of low impedance, coaxial branching cables were connected and in which it was found that the connection had an appreciably better transmission behaviour than that which could be expected, in particular with regard to attenuation at higher frequencies as a consequence of reflections due to mismatching.
   The present invention thus provides a network, the cabling of which can be installed (for example as standard network cabling in an office building), even before it is certain whether the equipment to be connected to the network will be connected thereto via balanced or unbalanced (coaxial) cables. By being able to connect the coaxial cables to one or more (parallel) balanced cores as desired, the impedance of the network cabling can be matched as well as possible to the impedance of the coaxial cable. Furthermore, since the interconnections between the cables have a very low impedance, use can be made of direct current signalling or control options without any impediment. Because the said first interconnection can be located between the end of the core of the connecting cable and the end of one or more of the cores of the network cables, the desired characteristic impedance can be chosen in this way, namely by choosing the number of cores. Finally, the proposed solution is simple, cheap and reliable.
2. Preferably, the cabling system is of star construction around a network centre in which the routing of the network can be established (semi-permanently) or controlled, for example by an automatically operating network monitoring device. Said preferred embodiment of the invention is consequently characterized in that said network cables each extend between a network centre and one of said network connections, which network centre comprises routing means for interconnecting, as desired, required cores and screens of the network cables which debouch into the network centre. This star construction of the cabling system achieves the result that, although the cabling is already entirely installed, for example in a new building, before the commissioning thereof, the cabling system can nevertheless afterwards be entirely routed in conformance with the wishes of the users of said cabling system. In this way, more individual network systems can make use of said one, previously installed cabling system. This is, inter alia, of importance if one building is used by more individual units (for example, companies) which each use their own network system.
3. In addition to a cabling system, the invention provides a network connecting device for detachably connecting an unbalanced connecting cable to network cables which are permanently connected to said network connecting device and which belong to a cabling system, which device is characterized by said first interconnection having a very low impedance to which, on the one hand, the respective end of the core of the connecting cable is detachably connected and which, on the other hand, is permanently connected to the respective end of the core or cores of the network cable, and also by the said second interconnection having a very low impedance to which, on the one hand, the respective end of the screen of the connecting cable is detachably connected and which, on the other hand, is permanently connected to the respective end of the screen or screens of the network cable.
4. Instead of by means of a network connecting device according to the invention, as was specified above, a terminal can also be connected via an adapter which is located between the terminal and a ("normal") network connection. Such an adapter for detachably connecting an unbalanced connecting cable to a network connecting device at which the ends of the cores and screening sheath or sheaths of the network cables belonging to a cabling system are terminated, is then characterized by the said first interconnection having a very low impedance to which, on the one hand, the respective end of the core of the connecting cable is detachably connected and to which, on the other hand, the respective end of the core or cores of the network cable is detachably connected and also by the said second interconnection having a very low impedance to which, on the one hand, the respective end of the screen of the connecting cable is detachably connected and to which, on the other hand, the respective end of the screen or screens of the network cable is detachably connected.
5. Instead of being located in the network connections or in adapters between the network connections, the said low-impedance interconnections may also be located in the cable connecting device with which a connecting cable is connected, via a "normal" network connection, to the network cabling. Such a cable connecting device for detachably connecting an unbalanced connecting cable to a network connecting device at which the ends of the cores and screening sheath or sheaths of the network cables belonging to a cabling system are terminated, is then characterized by the said first interconnection having a very low impedance to which, on the one hand, the respective end of the core of the connecting cable is permanently connected and to which, on the other hand, to the respective end of the core or cores of the network cable is detachably connected and also by the said second interconnection having a very low impedance to which, on the one hand, the respective end of the screen of the connecting cable is permanently connected and to which, on the other hand, the respective end of the screen or screens of the network cable is detachably connected

### C. REFERENCES

None

### D. EXEMPLARY EMBODIMENTS

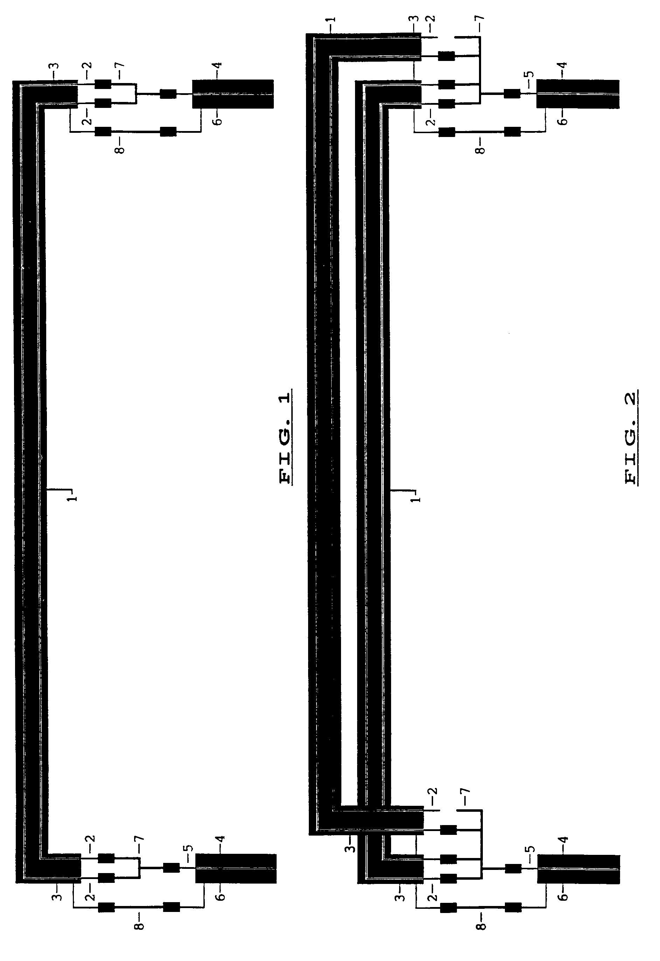

Figure 1 shows a first exemplary embodiment of a cabling system according to the invention. In this Figure, the cabling system is formed by a balanced network cable 1 which comprises two cores 2 and a screen 3 and which serves only for a point-to-point connection. Connected to the network cable 1 at either end are unbalanced connecting cables 4 which each comprise one core 5 and a screen 6. The connecting cables 4 are connected to the network cable 1 via low-impedance interconnections 7 and 8, i.e. the core 5 of each connecting cable 4 is connected to the two cores 2 of the network cable 1 via interconnection 7. The screen 6 of the connecting cable 4 is connected to the screen of the network cable 1 via interconnection 8.

Figure 2 also shows point-to-point cabling which is, however, formed by two parallel balanced cables 1. Here again the connecting cables 4 are connected to the network cable 1 via interconnections 7 and 8. In this exemplary embodiment, the interconnections 7 are connected, on the one hand, to two cores of the one network cable 1 and one core of the second network cable 1 and, on the other hand, to the core of the respective connecting cable 4. The interconnections 8 are connected, on the one hand, to the screens of the two network cables 1 and, on the other hand, to the screen of the connecting cable 4. In this exemplary embodiment, three parallel network cable cores 2 are thus connected to the respective connecting cable cores 5. This exemplary embodiment is used if the characteristic impedance of the connecting cable 4 is relatively low, whereas the preceding exemplary embodiment is used if the characteristic impedance of the connecting cable 4 is higher. If the characteristic impedance of the connecting cable 4 is still lower, it is also possible to connect the cores 5 via interconnection 7 to all four of the cores 2 of the network cables 1.

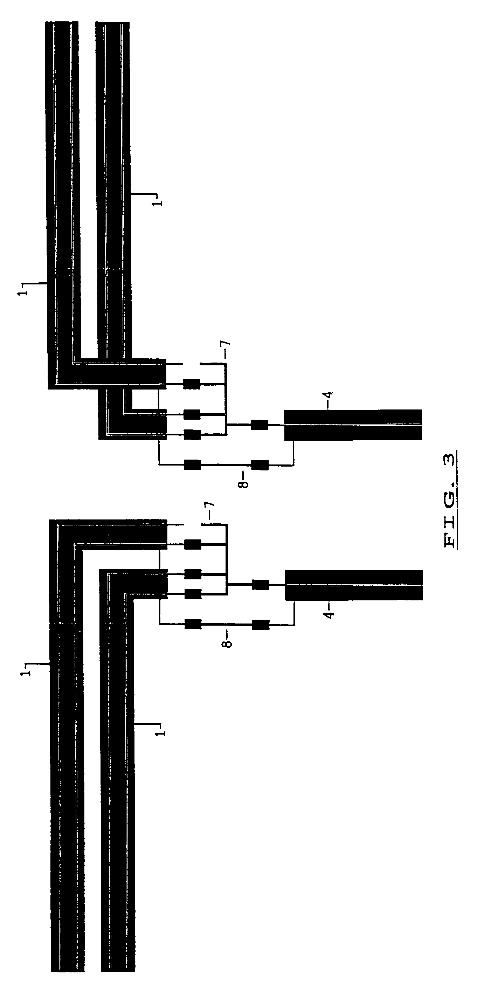

Figure 3 shows a section of a cabling system according to the invention which is formed by more cable runs of the type shown in Figure 2. If the cabling system serves a network having an electrically unbalanced bus structure such as Ethernet, the connecting cables 4 shown are both connected to a (personal) computer where the cables are connected to each other and to the computer. If the cabling system serves a network having an electrically balanced ring structure such as IBM Token Ring, the connecting cables, which are in that case electrically balanced like the network cables 1, are not connected via the interconnections 7 and 8 to the network cables 1 but are directly connected to one of those two.

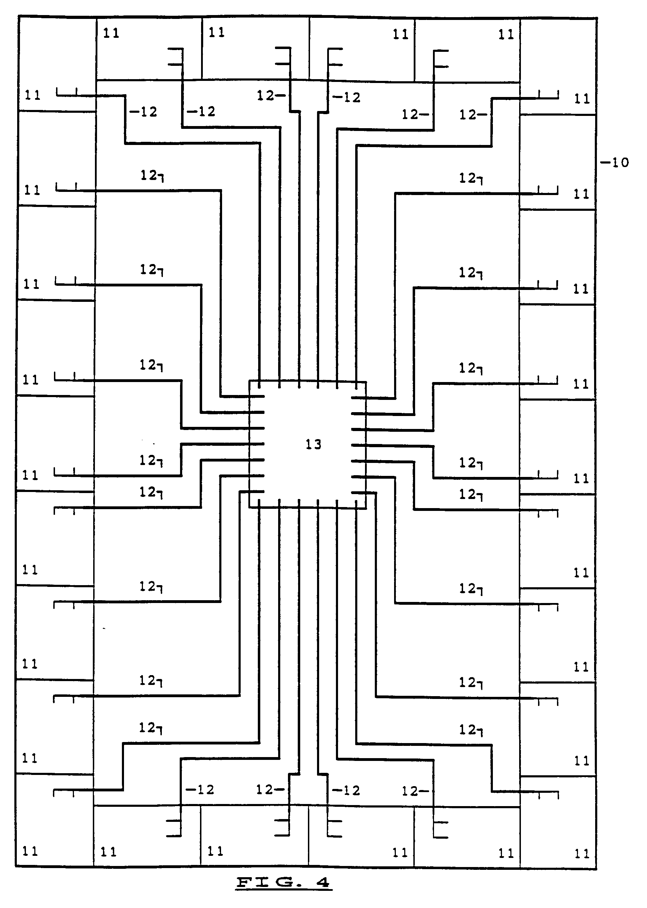

Figure 4 shows an application example of the cabling system according to the invention. This Figure shows a building 10 which has a number of rooms 11 and in which cabling is installed which comprises cable runs 12 between each of said rooms 11 and a central distributor 13. At the instant of installation of the cabling, the manner in which, and the equipment with which, use will be made of the cabling is still unknown. Each of the cable runs 12 between the rooms 11 and the distributor 13 comprises, in this exemplary embodiment, a double pair of the parallel balanced screened cables 1 shown in Figures 2 and 3, with the result that, in addition to point-to-point connections, various network configurations such as those having a ring or bus structure can be formed. In addition to the fact that various network configurations can be formed, the cabling can either be used by network systems which, according to their specification, have to make use of balanced cabling or by network systems which require unbalanced cabling. In the first case, the equipment is connected directly to the cable runs 12, (i.e. to one of the balanced cables 1 thereof), whereas in the latter case the equipment is connected to the cable runs 12 via the interconnections 7 and 8, mentioned above, by means of which, as it were, unbalanced cabling is simulated. However, the matching of the unbalanced connecting cables to the simulated unbalanced cabling is not completely perfect, and this forms a limitation to the number of cable runs 12 to be connected in series with one another; however, this number can be increased again by installing a so-called repeater after a number of cable runs 12 connected in series.

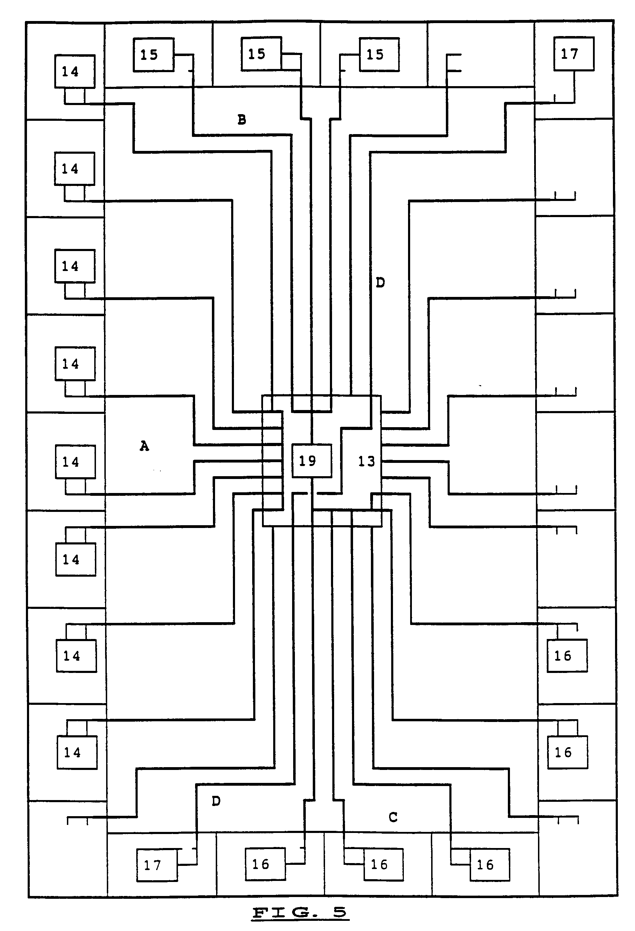

Figure 5 shows the building 10 shown in Figure 4 with the cabling shown in Figure 4 therein, which building 10 has been put into use and in which the cabling system serves a number of separate transmission networks A, B, C and D.

The network A is a ring-type network (for example, IBM Token Ring) which, in addition to being formed by the respective cable runs 12, is further formed by a number of personal computers 14 of which one operates as a network server. Said network A makes use of balanced cabling which is formed, in this exemplary embodiment, by one cable pair in each case from the respective cable runs 12 (which each comprise two cable pairs). Located between the two cables, debouching in the respective room 11, of the cable pair thus used are computers 14. In the central distributor 13, the cable ring is closed by looping the respective cables 12 debouching therein as a ring.

In contrast to the network A, the network B is a network having a bus structure (for example, Ethernet) formed by the series connection of a number of cable runs 12 to which a number of personal computers 15 are connected. This network is of a type which, according to the specifications, has to make use of unbalanced cabling. In this exemplary embodiment, the unbalanced cabling is formed by the double cable pairs of the cable runs 12, the computers 15 being located between the two cable pairs debouching in the respective room 11 in the manner which is shown in Figure 3. In the discussion of the Figures 6...8, the actual position of the interconnections 7 and 8 (see Figure 3) is dealt with in more detail. In the central distributor 13, the cable pairs 1 debouching therein are looped through.

Like the network B, the network C is also a network having a bus structure to which the personal computers 16 are connected as terminal pieces of equipment. However, it is equally possible that, instead of personal computers, for example, one central computer is connected to the network, the rest being terminals. In the present exemplary embodiment, the networks B and C are connected to each other via a coupling unit 19 which is installed in the distributor and through which information can be exchanged between these two independent networks.

Finally, Figure 5 also shows a point-to-point connection D between two computers 17 in different rooms. This connection D is formed by two cable runs 12 connected in series in the central distributor 13. The computers 17 can be connected directly to one of the cables 1 of the cable run 12 debouching in connection D between two computers 17 in different rooms. This connection D is formed by two cable runs 12 connected in series in the central distributor 13. The computers 17 can be connected directly to one of the cables 1 of the cable run 12 debouching in the room (balanced connection) or via the interconnections 7 and 8 shown in Figures 1...3 (unbalanced connection).

According to the invention, unbalanced (coaxial) connecting cables 4 can be connected to the network cables 1 via low-impedance interconnections between the cores 2 and 5 of the cables and between the screens 3 and 6 thereof. If, according to the network specifications, use must be made of balanced connecting cables (as in the case of network A) these are connected directly to the network cables 1 by connecting, in particular, the cores and the screen of the balanced connecting cable directly to those of one of the (balanced) network cables 1. If, according to the network specifications, use must be made of unbalanced connecting cables (as in the case of the networks B and C), these are connected to the network cables 1 via the low-impedance interconnections 7 and 8 as is shown in Figures 1...3, as a result of which, as it were, an unbalanced network is simulated.

The said interconnections (7 and 8 in Figures 1 ...3) between the respective cable cores and screens may form part of the permanent network connection at which the end of a cable run 12 is terminated in a room 11, or it may be incorporated in a separate adapter between such a permanent network connection and the connecting plug of the connecting cable 4, or it may be incorporated in the connecting plug itself. These alternatives are shown in Figures 6, 7 and 8.

Figure 6 shows a permanent network connecting device 20 according to a first embodiment of the invention in which the end, debouching in a room 11 (Figure 4), of a cable run 12, comprising a double set of balanced network cables 1, is terminated. In this case, three cores 2 of each set of balanced network cables 1 are terminated at interconnection 7 and the screen at interconnection 8. The other side of the interconnections 7 and 8 are connected to plug sockets 21. The terminal equipment to be connected to the network is connected to the plug sockets 21, and consequently to the network cables 1, via the connecting cable 4 which is terminated at a cable plug 23. The embodiment shown in this figure has the disadvantage that, if the connecting cable 4 has a relatively large characteristic impedance, one of the three cores 2 of the interconnection 7 has to be detached per set of network cables 1; this then has to be done in the permanent network connection 20. Equally, if the impedance of the connecting cable 4 is relatively low, the fourth core of each set of network cables 1 must also be connected to the interconnection 7. For these reasons it may be attractive to locate the interconnections 7 and 8 in a separate adapter, as Figure 7 shows.

In the embodiment of Figure 7, the interconnections 7 and 8 are located in an adapter 25 which is connected, by means of plug connections 26, to the network cables 1 (terminated in a permanent network connecting device 29) and, by means of plug connections 27, to the connecting cables 4 (terminated in cable connecting plug 23). Depending on the characteristic impedance of the connecting cable 4 to be connected to the network, an adapter 25 is used which is connected to one, two, three or four cores 2.

Finally, Figure 8 shows an embodiment in which the interconnections 7 and 8 are located in a cable connecting plug 28, by which arrangement the use of a separate adapter is avoided.

## Claims

1. Cabling system for a local network, comprising network connections for connecting terminals and the like to the network via an unbalanced connecting cable (4) having one core (5) and a screening sheath (6) surrounding said core, and furthermore comprising network cables (1) for connecting said network connections to one another, which network cables (1) comprise at least one bundle of two or more cores (2), and also at least one screening sheath (3) surrounding said bundle, the ends of which cores (2) and screening sheath (3) are terminated at the said network connections, characterized in that the said network connections, or at least some thereof, comprise a first interconnection (7) which has a very low impedance and which is located between the end of the core (5) of said connecting cable (4) and the end of one or more of the cores (2) of said network cables (1), and also a second interconnection (8) which has a very low impedance and which is located between the end of the screen (6) of the connecting cable (4) and the end of the screen (3) of the network cables (1).

2. Cabling system according to Claim 1, characterized in that said network cables (1) each extend between a network centre (13) and one of said network connections, which network centre comprises routing means for interconnecting, as desired, required cores (2) and screens (3) of the network cables which debouch into the network centre.

3. Network connecting device (20) for detachably connecting an unbalanced connecting cable (4) to network cables (1) which are permanently connected to said network connecting device (20) and which belong to a cabling system according to claim 1, which device (20) is characterized by said first interconnection (7) having a very low impedance to which, on the one hand, the respective end of the core (5) of the connecting cable (4) is detachably connected and which, on the other hand, is permanently connected to the respective end of the core or cores (2) of the network cable (1), and also by said second interconnection (8) having a very low impedance to which, on the one hand, the respective end of the screen (6) of the connecting cable (4) is detachably connected and which, on the other hand, is permanently connected to the respective end of the screen or screens (2) of the network cable (1).

4. Adapter (25) for detachably connecting an unbalanced connecting cable (4) to a network connecting device (29) at which the ends of the cores (2) and screening sheath or sheaths (3) of the network cables (1) belonging to a cabling system according to Claim 1 are terminated, which adapter (25) is characterized by the said first interconnection (7) having a very low impedance to which, on the one hand, the respective end of the core (5) of the connecting cable (4) is detachably connected and to which, on the other hand, the respective end of the core or cores (2) of the network cable (1) is detachably connected and also by said second interconnection (8) having a very low impedance to which, on the one hand, the respective end of the screen (6) of the connecting cable (4) is detachably connected and to which, on the other hand, the respective end of the screen or screens (3) of the network cable (1) is detachably connected

5. Cable connecting plug (28) for detachably connecting an unbalanced connecting cable (4) to a network connecting device (29) at which the ends of the cores (2) and screening sheath or sheaths (3) of the network cables (1) belonging to a cabling system according to Claim 1 are terminated, which device (28) is characterized by said first interconnection (7) having a very low impedance to which, on the one hand, the respective end of the core (5) of the connecting cable (4) is permanently connected and to which, on the other hand, the respective end of the core or cores (2) of the network cable (1) is detachably connected and also by the said second interconnection (8) having a very low impedance to which, on the one hand, the respective end of the screen (6) of the connecting cable (4) is permanently connected and to which, on the other hand, the respective end of the screen or screens (2) of the network cable (1) is detachably connected.

## Patentansprüche

1. Verkabelungssystem für ein lokales Netzwerk, umfassend Netzwerkanschlüsse zum Anschliessen von Terminals und dergleichen an das Netzwerk über ein unsymmetrisches Anschlusskabel (4), das eine Ader (5) und einen die Ader (5) umgebenden Abschirmmantel (6) aufweist, weiter umfassend Netzwerkkabel (1), um diese Netzwerkanschlüsse miteinander zu verbinden, wobei die Netzwerkkabel (1) mindestens ein Bündel aus zwei oder mehr Adern (2) aufweisen, sowie mindestens einen dieses Bündel umgebenden Abschirmmantel (3), wobei die Enden der Adern (2) und des Abschirmmantels (3) bei den Netzwerkanschlüssen enden, **dadurch gekennzeichnet, dass** die Netzwerkanschlüsse, oder mindestens einige von ihnen, eine erste Zwischenschaltung (7) umfassen, die eine niedrige Impedanz aufweist, und die sich zwischen dem Ende der Ader (5) des Anschlusskabels (4) und dem Ende eines oder mehr Adern (2) der Netzwerkkabel (1) befindet, und eine zweite Zwischenschaltung (8), die eine sehr niedrige Impedanz aufweist, und sich zwischen dem Ende der Abschirmung (6) des Anschlusskabels (4) und dem Ende der Abschirmung (3) der Netzwerkkabel (1) befindet.

2. Verkabelungssystem nach Anspruch 1, **dadurch gekennzeichnet**, **dass** sich jedes der Netzwerkkabel (1) zwischen einem Netzwerkzentrum (13) und einem der Netzwerkanschlüsse erstreckt, wobei das Netzwerkzentrum (13) Leitwegmittel zum wahlweisen Zwischenschalten von erforderlichen Adern (2) und Abschirmungen (3) der Netzwerkkabel (1) umfasst, die in das Netzwerkzentrum (13) münden.

3. Netzwerkanschlussvorrichtung (20) zum lösbaren Anschliessen eines unsymmetrischen Verbindungskabels (4) an die Netzwerkkabel (1), die permanent an der Netzwerkanschlussvorrichtung (20) angeschlossen sind und die zu einem Verkabelungssystem nach Anspruch 1 gehören, **gekennzeichnet durch** die erste Zwischenschaltung (7), die eine sehr niedrige Impedanz aufweist, an die einerseits das entsprechende Ende der Ader (5) des Anschlusskabels (4) lösbar angeschlossen ist, und die andererseits mit dem entsprechenden Ende der Ader oder der Adern (2) des Netzwerkkabels (1) permanent verbunden ist, und die zweite Zwischenschaltung (8), die eine sehr niedrige Impedanz aufweist, an die einerseits das entsprechende Ende der Abschirmung (6) des Anschlusskabels (4) lösbar angeschlossen ist, und die andererseits mit dem entsprechenden Ende der Abschirmung oder Abschirmungen (3) des Netzwerkkabels (1) permanent verbunden ist.

4. Adapter (25) zum lösbaren Anschliessen eines unsymmetrischen Anschlusskabels (4) an eine Netzwerkanschlussvorrichtung (29), bei der die Enden der Adern (2) und des Abschirmmantels oder der Abschirmmäntel (3) des zu einem Verkabelungssystem nach Anspruch 1 gehörenden Netzwerkkabels (1) enden, **gekennzeichnet durch** die erste Zwischenschaltung (7), die eine sehr niedrige Impedanz aufweist, an die einerseits das entsprechende Ende der Ader (5) des Anschlusskabels (4) angeschlossen ist, und an die andererseits das entsprechende Ende der Ader oder der Adern (2) des Netzwerkkabels (1) lösbar angeschlossen ist, und die zweite Zwischenschaltung (8), die eine sehr niedrige Impedanz aufweist, an die einerseits das entsprechende Ende der Abschirmung (6) des Anschlusskabels (4) angeschlossen ist, und an die andererseits das entsprechende Ende der Abschirmung oder der Abschirmungen (3) des Netzwerkkabels (1) lösbar angeschlossen ist.

5. Kabelanschlussstecker (28) zum lösbaren Anschliessen eines unsymmetrischen Anschlusskabels (4) an eine Netzwerkanschlussvorrichtung (29), bei der die Enden der Adern (2) und des Abschirmmantels oder der Abschirmmäntel (3) der zu einem Verkabelungssystem nach Anspruch 1 gehörende Netzwerkkabel (1) enden, **gekennzeichnet durch** die erste Zwischenschaltung (7), die eine sehr niedrige Impedanz aufweist, an die einerseits das entsprechende Ende der Ader (5) des Anschlusskabels (4) permanent angeschlossen ist, und an die andererseits das entsprechende Ende der Ader oder der Adern (2) des Netzwerkkabels (1) lösbar angeschlossen ist, und die Zweite Zwischenschaltung (8), die eine sehr niedrige Impedanz aufweist, an die einerseits das entsprechende Ende der Abschirmung (6) des Anschlusskabels (4) permanent angeschlossen ist, und an die andererseits das entsprechende Ende der Abschirmung oder der Abschirmungen (2) des Netzwerkkabels (1) lösbar angeschlossen ist.

## Revendications

1. Système de câblage pour réseau local, comprenant des connexions de réseau destinées à connecter des terminaux et analogues au réseau par l'intermédiaire d'un câble non équilibré de connexion (4) ayant une âme (5) et une gaine de blindage (6) entourant l'âme, et comprenant en outre des câbles de réseau (1) destinés à connecter les connexions du réseau les unes aux autres, les câbles du réseau (1) comprenant au moins un faisceau d'au moins deux âmes (2), et aussi au moins une gaine (3) de blindage entourant le faisceau, les extrémités des âmes (2) et de la gaine de blindage (3) étant terminées aux connexions du réseau, caractérisé en ce que les connexions du réseau ou au moins certaines d'entre elles comportent une première interconnexion (7) qui a une très faible impédance et qui est disposée entre l'extrémité de l'âme (5) du câble de connexion (4) et l'extrémité d'une ou plusieurs âmes (2) des câbles du réseau (1), et aussi une seconde interconnexion (8) qui a une très faible impédance et qui est placée entre l'extrémité du blindage (6) du câble de connexion (4) et l'extrémité du blindage (3) des câbles du réseau (1).

2. Système de câblage selon la revendication 1, caractérisé en ce que les câbles du réseau (1) sont disposés chacun entre un centre (13) du réseau et l'une des connexions du réseau, le centre du réseau comprenant un dispositif d'acheminement destiné à interconnecter à volonté des âmes (2) et blindages (3) nécessaires des câbles du réseau qui débouchent au centre du réseau.

3. Dispositif (20) de connexion de réseau destiné à connecter temporairement un câble non équilibré (4) de connexion à des câbles (1) du réseau qui sont connectés de manière permanente au dispositif (20) de connexion du réseau et qui appartiennent à un système de câblage selon la revendication 1, le dispositif (20) étant caractérisé en ce que la première interconnexion (7) a une très faible impédance à laquelle d'une part l'extrémité respective de l'âme (5) du câble de connexion (4) est connectée de manière amovible et à laquelle, d'autre part, est connectée de manière permanente l'extrémité respective de l'âme ou des âmes (2) du câble du réseau (1), et aussi en ce que la seconde interconnexion (8) a une très faible impédance a laquelle d'une part l'extrémité respective du blindage (6) du câble de connexion (4) est connectée de façon temporaire et à laquelle, d'autre part, est connectée de manière permanente l'extrémité respective du blindage ou des blindages (2) du câble du réseau (1).

4. Adaptateur (25) destiné à connecter temporairement un câble non équilibré de connexion (4) à un dispositif (29) de connexion de réseau auquel les extrémités des âmes (2) et de la gaine ou des gaines de blindage (3) des câbles du réseau (1) appartenant au système de câblage selon la revendication 1 sont terminées, l'adaptateur (25) étant caractérisé en ce que la première interconnexion (7) a une très faible impédance à laquelle, d'une part, l'extrémité respective de l'âme (5) du câble de connexion (4) est connectée de façon temporaire et à laquelle, d'autre part, l'extrémité respective de l'âme ou des âmes (2) du câble du réseau (1) est connectée temporairement, et aussi en ce que la seconde interconnexion (8) a une très faible impédance à laquelle, d'une part, l'extrémité respective du blindage (6) du câble de connexion (4) est connectée temporairement et à laquelle, d'autre part, l'extrémité respective du blindage ou des blindages (3) du câble du réseau (1) est connectée temporairement.

5. Connecteur (28) de connexion de câble, destiné à connecter temporairement un câble non équilibré de connexion (4) à un dispositif (29) de connexion de réseau auquel les extrémités des âmes (2) et de la gaine ou des gaines (3) de blindage des câbles du réseau (1) appartenant à un système de câblage selon la revendication 1 sont terminées, le connecteur (28) étant caractérisé en ce que la première interconnexion (7) a une très faible impédance à laquelle, d'une part, l'extrémité respective de l'âme (5) du câble de connexion (4) est connectée de manière permanente et à laquelle, d'autre part, l'extrémité respective de l'âme ou des âmes (2) du câble du réseau (1) est connectée temporairement, et aussi en ce que la seconde interconnexion (8) a une très faible impédance à laquelle, d'une part, l'extrémité respective du blindage (6) du câble de connexion (4) est connectée de manière permanente et à laquelle, d'autre part, l'extrémité respective du blindage ou des blindages (2) du câble du réseau (1) est connectée de façon temporaire.
